# EUROPEAN PATENT SPECIFICATION

(11) **EP 0 720 160 B1**
(45) Date of publication and mention of the grant of the patent: **20.03.2002**
(21) Application number: 95120611.9
(22) Date of filing: 27.12.1995
(51) Int. Cl.: G11B 7/26, G11B 7/24

(54) **Optical disk with pits formed by stamper and method for fabricating the same**
Optische Platte mit geprägten Pits und Verfahren zu ihrer Herstellung
Disque optique à marques formé par une matrice et son procédé de fabrication

(30) Priority: 27.12.1994 JP 33887594
(43) Date of publication of application: 03.07.1996
(73) Proprietor: NEC CORPORATION, Tokyo (JP)
(72) Inventor: Katsuda, Shinichi, Minato-ku, Tokyo (JP)
(74) Representative: Betten & Resch

(56) References cited:
- EP-A- 0 299 073
- EP-A- 0 350 078
- US-A- 4 342 714
- US-A- 4 762 770

## Description

### (1) Field of the Invention

The present invention relates to an optical disk in which pits (each of which is in the form of a protrusion but which is nevertheless defined as "pit" herein) are formed by a stamper, and more particularly to an optical disk adapted to a high density and high speed fabrication, and a method for fabricating the same.

### (2) Description of the Related Art

Recent development of data processing and communication has drastically increased the volume of data and information that are handled both by organizations and individuals. For enabling the handling such a huge volume of data, an optical disk as a memory medium for simply and speedily processing the data is being continuously developed and improved.

As compared with other memory medium such as a magnetic disk and tape, the optical disk is advantageous in that the recording density is higher, the non-volatile characteristics are superior, the data access is shorter, and the mass reproduction (replica disk production) is easier, resulting in a rapid development and in an increased demand with wider applications. Today, various types of memory medium depending on their uses are developed and being used, the types including a read only memory (ROM) type, a write once read many type with writing capability, a rewritable type, etc.

Generally the optical disk described above is made available by mass production through a method wherein the master disk called a "stamper" in which the data is recorded is prepared, and this stamper is used to prepare a replica disk which has pits in an undulation or groove form produced on a surface of a disk made of, for example, a synthetic resin board.

The stamper which becomes the master disk of the optical disk is prepared by the following process steps:

1) First, photoresist (photo-sensitive resin) is applied on a glass disk to become the master disk and, while this is being rotated, a laser light spot with a diameter slightly less than 1 µm is irradiated from a mastering light source, thus recording the necessary data, etc. by exposure. In this case, the light spot moves at a constant speed in the radial direction so that a latent image is formed in a spiral form on the disk (normally with a pitch of about 1.6 µm).

2) Then, the development follows.

When developed, the photoresist at the exposed portions is dissolved out by the developing solution whereby the tracks of pits in an undulation form are produced on the surface of the disk board.

Then, after evaporation of a metal onto the disk board, the disk is replayed and the recorded state is tested for any defects such as damage and scratches.

3) Finally, the finished master disk is nickel-plated, and this completes the stamper.

The stamper thus completed contains the data, etc. recorded in the undulation form. With this stamper as the master disk, the replica disks can be mass-produced through a process such as a plastic molding process.

The method for producing replica disks may be categorized into two processes depending on how pits are formed, one process being an injection molding and the other being a 2P (Photo-polymer) process.

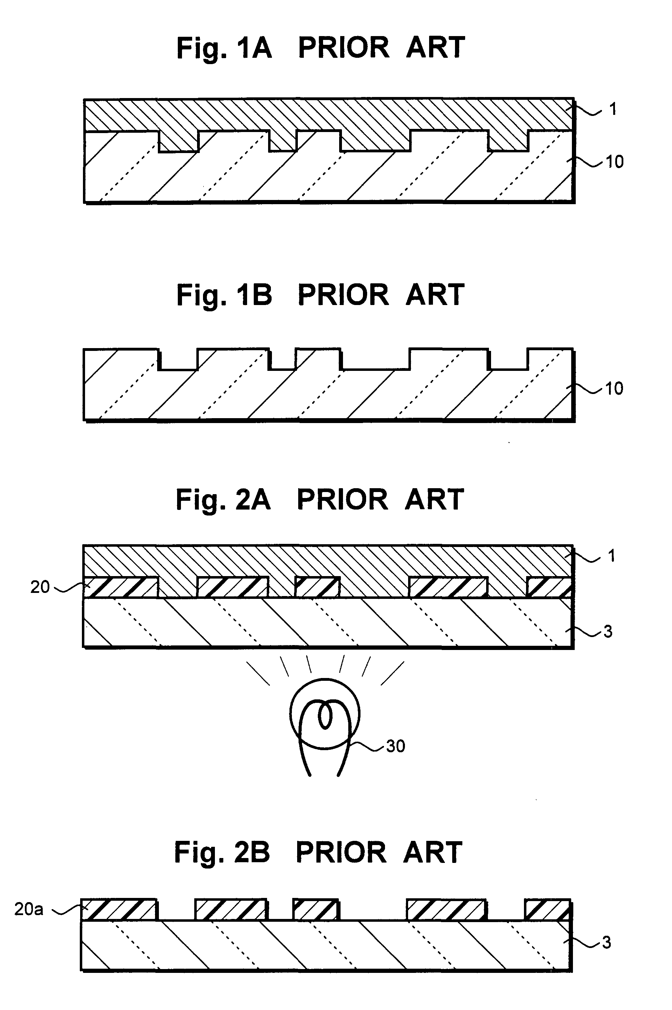

The steps of a method for producing replica disks by injection molding which is widely used in mass-producing the optical disks are diagrammatically illustrated in Figs. 1A and 1B.

As shown, the injection molding for the replica production is carried out by placing a stamper 1 within a metal mold (not shown) to which plastic resin 10 (mainly polycarbonate) is injected by an injection molding apparatus followed by steps of compression and cooling (the state shown in Fig. 1A) and a step of taking out the product from the metal mold. Thus, the undulation forms on the stamper 1 are transferred as they are as pits 10a on the plastic board (Fig. 1B).

On the other hand, for the production of an optical disk with a comparatively small number of lots such as for a disk of large diameter or for special uses, the 2P method illustrated in Figs. 2A and 2B may be employed.

The 2P method is one in which an ultraviolet cured resin 20 is positioned between a transparent plate 3 and a stamper 1, and this three element overlaid structure (Fig. 2A) is subjected to the irradiation from the side of the transparent plate 3 from a curing light source 30 and, when the resin is cured, the stamper 1 is removed, thus forming pits 20a.

Thus, according to the 2P method, as noted from Fig. 2A, the transparent base plate 3 of a material such as glass or plastic on which photo-polymer (ultraviolet curing resin) 20 is applied is pressed against the stamper 1, and the resin is cured by the irradiation of the ultraviolet rays, thereby forming the pits 20a.

The replica disk produced by the transfer of the tracks of pits on the master disk according to each of the above described methods is further processed according to types of uses of the disk. If the use is for the write once read many type or a rewritable type, a recording film is deposited and, if the use is for a read only type, a light reflective film is deposited. Then, the disk finishing processes such as the provision of a transparent protective layer are carried out whereby the optical disk is completed.

Both the above methods are ones in which the physical shapes of undulations on the surface of the stamper are caused to be transferred as they are such that the undulations are read and reproduced by the reproduction light source. The optical disk of such a type is a phase difference reproduction type disk and is suited for the mass-production of the same replica disk.

A technique relating to a production of the phase difference reproduction type optical disk is disclosed in Japanese Patent Application Kokai Publication No. Sho 62-287448 as a reproduction method for data recording medium.

With a rapid increase in the need for the optical disk of the kind explained above, there is a demand that such a disk be produced at a lower cost and in a shorter period of time and, even with the optical disk which is already considered to be of a high density and high volume type, there is a further demand for even higher density and higher volume type optical disks.

Especially when the data to be processed are image data, the data becomes enormous so that the conventional disks lack the capacity, for example, in those where one side is of 300 MB (for example, 130 mm, write once read many type or rewritable type disk) or of 600 MB (CD-ROM).

For the above reason, there is a demand for an increase in the capacity per side of the disk. In order to meet this demand, it is necessary to narrow the width of each pit (or groove) itself, or to form a larger number of pits on the surface of the disk. However, with the construction of pits as in the conventional optical disk described above, there is a physical limit in making the pit patterns finer because, in the phase difference reproduction type medium, the undulations on the stamper are transferred as they are, and thus it is difficult to solve the lacking of capacity with the conventional construction explained above.

There is a proposal attempting to form fine pit patterns on the optical disk which is disclosed in Japanese Patent Application Kokai Publication No. Hei 1-098142, which relates to an optical disk mastering device wherein a stamper is exposed by using a light source whose wavelength is made shorter through a non-linear optical element.

Also, there is a proposal in Japanese Patent Application Kokai Publication No. Hei 1-317241 which relates to a method of preparing a master disk of an optical disk and which discusses a problem of a color fading type layer in a conventional structure. Here, in an attempt to make an improvement in the process to overcome the problem and to make the bit patterns finer, the surface of the photoresist is exposed to the developing solution prior to the exposure process so as to form on the surface a layer not easily dissolved when exposed to the developing solution.

However, all the proposed techniques disclosed in the above references, in principle, follow the conventional methods and attempt to make the pit patterns finer only from the processing aspects. Thus, as compared with the degree of the severe requirements for the conditions relating to the exposure phenomena, such as controlling of temperature and time, the extent of the improvement in making the pit patterns finer has not advanced beyond certain limits.

Recently, it has been reported that an attempt is being made to obtain a fine pit by shortening the wavelength of a mastering light source for effecting the recording of exposure on a stamper of the master disk.

In this attempt, instead of the visible light (for example, Ar:457.9 nm, etc.) which has heretofore been mainly used as a mastering light source, the ultraviolet light (for example, Ar 363.8 nm, etc.) whose wavelength is shorter is used for forming fine and focused beam spots. This attempt has been reported in "Joint International Symposium on Optical Memory and Optical Data Storage", 1993, Hawaii, pages 38 and 44.

The higher density of the disk is of course important, but the technique for enhancing the density at the reproduction system side as above is essential. However, for the shortening of the wavelength of the reproducing light source, in view of the requirements for the reproduction quality and large scale system, it is necessary to provide such a large scale light source as that typically represented by a gas laser, which is difficult from a practical point of view and is unrealistic from a cost aspect.

In view of the above, though being a high density technique used similarly at the reproduction system, the optical system which employs super-resolution of light can be used with many advantages including those in which the system is compact and low cost and in which a conventional light source having a high reliability may be used.

However, even in the above optical system in which super-resolution is utilized, there is a problem that the passing round of the sidelobes of a signal leads to the deterioration of the quality of the signal. In order to avoid this problem, the system requires the provision of a filter, a pinhole, etc. before a detector for eliminating the sidelobes.

Also, even if the sidelobe problem were overcome by some means, in the optical disk for CD-ROM, etc. which is used today and which carries out the reproduction by using the phase difference as explained before, the optical disk itself has not necessarily as yet reached a level which can sufficiently utilize the high density reproduction system such as one utilizing super-resolution. This means that a corresponding improvement is required on the disk side.

That is, along with the recent rapid advancement in the field of high level data communication and processing, there is a need that the press step for forming the undulations in the conventional optical disk be replaced by a new configuration of the disk medium in which, not as a phase difference reproduction type, light reflection and absorption are utilized, and which is adapted to a high speed pattern transfer during the fabrication process and a super-resolution reproduction.

From EP-A-299 073 an optical recording medium is known having a high reflection factor portion and a low reflection factor portion formed on a substrate. The low reflection factor portion is produced by the production step of surface coarsening. When information is read the recorded information is distinguished by sensing the difference in the optical reflection factor between both the portions. Because of the surface coarsening of the low reflection factor portion the difference in the reflection factor can easily be detected.

An object of the present invention, therefore, is to overcome the problems existing in each of the prior art techniques, and to provide an optical disk and a fabrication method for the same, the optical disk being adapted to be produced in a high density form and at a high production speed, without making a large change in the series of the production processes heretofore adopted in the production of the conventional replica disks.

According to one aspect of the invention, there is provided an optical disk comprising:
a reflective film which has a first reflectivity; and
a plurality of pits over which the reflective film is formed, the pits being of carbon or magnetic particles formed of a material having a second reflectivity different from the first reflectivity of the reflective film.

According to another aspect of the invention, there is provided a method for fabricating an optical disk which includes a reflective film having a first reflectivity, and a plurality of pits of particles formed of a material having a second reflectivity different from the first reflectivity of the reflective film, the method comprising the steps of:
attaching the particles on a projected portion of a stamper;
forming a replica disk by steps in which the stamper is caused to be in contact with a surface of a transparent plate of the optical disk and the particles are caused to be transferred onto the transparent plate thereby forming pits on the transparent plate; and
forming the reflective film on the replica disk.

In the optical disk having the above configuration and having been fabricated according to the invention, the replica disk is formed through a process in which the pits are not formed by physical undulations but in which particles such as carbon and iron oxide particles are caused to be adhered on the surface of the optical disk, thus enabling the replica disk to be recorded at a high density and to be fabricated at a high fabrication speed.

The above and other objects, features and advantages of the present invention will be apparent from the following description of preferred embodiments of the invention explained with reference to the accompanying drawings, in which:
Figs. 1A and 1B are diagrams of a conventional structure being fabricated, for showing the steps of a method for fabricating a conventional optical disk;
Figs. 2A and 2B are diagrams of another conventional structure being fabricated, for showing the steps of a method for fabricating such conventional optical disk;
Figs. 3A, 3B and 3C are diagrams of a structure being fabricated of a first embodiment according to the invention, for explaining the sequential process steps for fabricating the same; and
Figs. 4A and 4B are diagrams of structure being fabricated of a second embodiment according to the invention, for explaining the sequential process steps for fabricating the same.

Now, preferred embodiments of the inventions are explained with reference to the drawings.

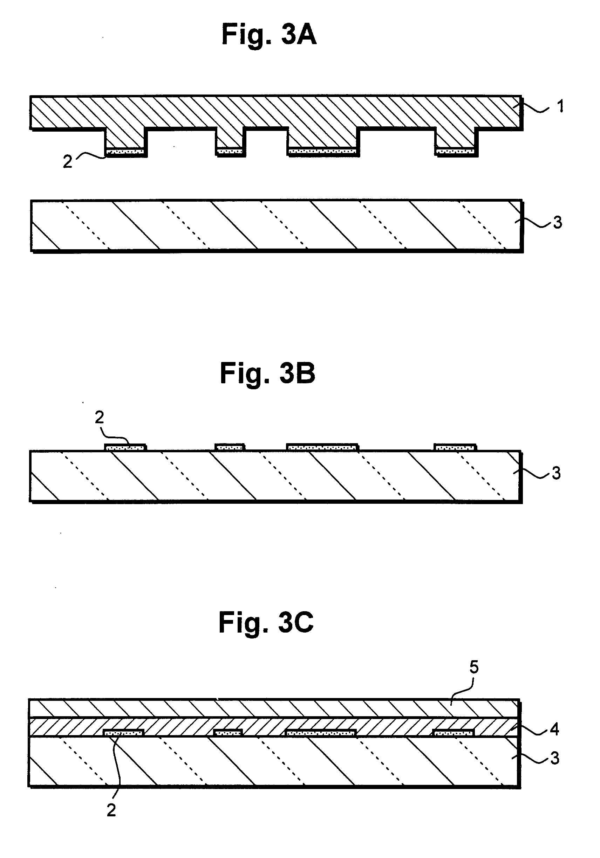

Figs. 3A, 3B and 3C diagrammatically show respective elements of the structure for explaining the sequential process steps for fabricating an optical disk of a first embodiment according to the invention.

In Fig. 3A, numeral 1 represents a stamper as a master or mother disk which is prepared by nickel-plating a board in which data, etc. is recorded. This stamper is prepared using the same processes as those used in the conventional method explained above.

In this embodiment, a pit 2 which is of carbon particles is applied and attached on a projected portion of the stamper as shown in Fig. 3A. When the stamper 1 is pressed against a transparent plate 3, the pit 2 is transferred onto a surface of the transparent plate 3 as shown in Fig. 3B.

As to the diameter of each of the carbon particles constituting the pit 2, it is generally considered that the smaller the better (for example, 100 Angstroms). However, in the case where the carbon particles are extremely fine, they tend to be coagulated and be non-uniform so that a desirable diameter is in the order of 100 - 500 Angstroms.

The transparent plate 3 which constitutes the optical disk is generally formed of materials such as polycarbonate, glass or polyolefin, and acrylics.

A reflective film 4 formed on the pit generally employs an aluminum alloy. Further, a protective layer 5 formed on the reflective film 4 employs ultraviolet curing resin of an acrylic or urethane type.

Now, the process of fabricating the optical disk according to this embodiment is explained with reference to Figs. 3A, 3B and 3C. The optical disk is fabricated using the completed stamper 1 as the master or mother disk.

The first step is to apply and attach the carbon particles onto the surface of each of the projected portion of the stamper 1.

In this case, depending on the necessity, the carbon particles may be dispersed in a binder containing an organic solvent. This ensures the uniform attachment of the carbon particles on the stamper 1.

The stamper 1 in the above state is pressed against the transparent plate 3 whereby the carbon particles are transferred onto the transparent plate 3 and the pit 2 is formed on the surface of the transparent plate 3.

Then, on the surface of the transparent plate 3 on which the pit 2 of the carbon particles is formed, a reflective film 4 is formed by sputtering the aluminum alloy using the same method as used in the conventional method. To protect the pit surface, a protective layer 5 of ultraviolet curing resin is applied by using a spin coater, and the disk is completed when the ultraviolet resin is cured.

Depending on the need, label printing such as for titles is made on a surface of the protective layer 5.

With the optical disk on which the pit is formed as above, it is possible to carry out the reproduction by using the contrast between the reflective film formed of, for example, aluminum on the disk and the pit formed of carbon particles, that is, the difference in the reflectivities between the reflective film and the pit, without using the phase difference which results from physical undulations as in the conventional optical disk.

According to the fabrication method of this embodiment, it is possible to fabricate a replica disk without changing the conventional fabrication method and at a higher speed than in the conventional fabrication method, and it is also possible to obtain the recording of a higher density because the pit is not formed by physical undulations but only by the particles attached.

where the undulation structure is used for the pits as in the conventional optical disk, there has been a problem of the passing round of the sidelobes caused by phase pits during the super-resolution reproduction. The present invention overcomes this problem and can utilize the same light source as used for the conventional optical disk.

Thus, as compared with the case where a shortwave light source is used, it is possible to reduce the cost of the light source itself, and also to avoid a problem such as the lowering of the sensitivity resulting from the employment of shorter wavelengths for photodetectors.

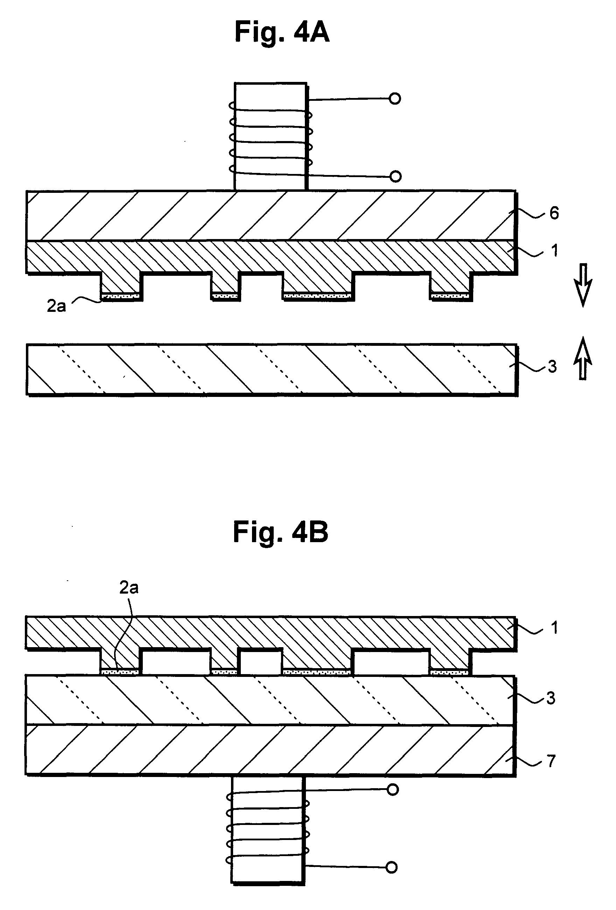

Next, a second embodiment of the invention is explained with reference to Figs. 4A and 4B , which diagrammatically show elements constituting the structure for use in explaining the sequential process steps of the fabrication method.

In this embodiment, in order to carry out a process in which the pit transferred onto the transparent plate is more securely adhered thereon, the process employs magnetic particles and electromagnet means during the pit formation.

Generally, the fine particles tend to be coagulated so as to form masses thereof, and a technique available to prevent this problem is a method wherein the particles are dispersed in a binder. This is an area in which extensive know-how is involved and special manufacturing techniques are required. However, use of the magnetic particles, especially iron oxides (Fe204 or γ-hematite Fe304) has been known since comparatively long ago, and has been confirmed as being useful for purposes of the uniformity. Thus, the magnetic particles have been in use in fields such as high polymer films typically represented by polyester films.

For example, as a dispersing technology in magnetic tapes, a process is available wherein a recording material in which a fine particle of iron oxide with a diameter less than 1 µm is stably dispersed in industrial application without being coagulated is uniformly applied on high polymer films typically represented by polyester films.

In this second embodiment, the above explained technology for attaining the uniformity of particles is applied to the formation of pits.

That is, in the second embodiment, the magnetic field is provided, through an electromagnet 6, on the stamper 1 formed of nickel which is a ferromagnetic material, and the pit 2a formed by uniformly distributed magnetic particles are attracted to and adhered once on the stamper side (state shown in Fig. 4A). Then, the magnetic field is provided from the side of a transparent plate 3 through an electromagnet 7 and at the same time the stamper 1 is demagnetized, so that the pit 2a formed of the magnetic particles on the stamper 1 are attracted to and transferred on the surface of the transparent plate 3 (state shown in Fig. 4B).

Since the nickel that forms the stamper 1 is a ferromagnetic material, the binder (not shown) in which the magnetic particles have been dispersed through the electromagnet 6 is attracted to and attached on the projected portion of the stamper. Then, the magnetic particles on the projected portion are pressed against the transparent plate 3 with a magnetic field through an electromagnet 7 being applied from the opposite direction, and this ensures the unfailing formation of the pit 2a on the transparent plate 3 by the magnetic particles.

With the above procedures, the uniform magnetic particles are transferred as pits 21 on the transparent plate 3. Subsequently, the reflective film and the protective layer are formed using the same procedures as used for the first embodiment.

For the formation of the stamper 1, a vacuum thin film formation technique such as a sputtering technique is used following the exposure process, so that a nickel alloy of about 300 µm is formed by a casting process (electro-casting). It is preferable that surfaces of the inner and outer peripheries and the back of the stamper be subjected to suitable finishing processes.

According to the fabrication process explained above, there is no need to make any large changes in the set of existing conventional sequential process steps for the formation of the optical disk, and it is possible to fabricate a high density optical disk at a high speed.

While the invention has been described in its preferred embodiments, it is to be understood that the words which have been used are words of description rather than limitation and that changes within the purview of the appended claims may be made without departing from the true scope of the invention.

## Claims

1. An optical disk comprising:
a reflective film (4) which has a first reflectivity; and
a plurality of pits (2) over which said reflective film is formed, said pits being formed of a material having a second reflectivity different from said first reflectivity of the reflective film, **characterized in that** pits are formed of carbon particles.

2. The optical disk according to claim 1, in which each of said carbon particles has a diameter of 100 - 500 Angstroms.

3. An optical disk comprising:
a reflective film (4) which has a first reflectivity; and
a plurality of pits (2) over which said reflective film is formed, said pits being formed of a material having a second reflectivity different from said first reflectivity of the reflective film, **characterized in that** said pits are formed of magnetic particles.

4. The optical disk according to claim 3, in which said particles are iron oxide particles.

5. A method for fabricating an optical disk which includes a reflective film (4) having a first reflectivity, and a plurality of pits (2) of particles formed of a material having a second reflectivity different from said first reflectivity of the reflective film, said method **characterized by** comprising the steps of:
attaching said particles on a projected portion of a stamper (1);
forming a replica disk by steps in which said stamper is caused to be in contact with a surface of a transparent plate (3) of the optical disk and said particles are caused to be transferred onto said transparent plate thereby forming pits on said transparent plate; and forming said reflective film on said replica disk.

6. The method for fabricating an optical disk according to claim 5, which includes a step in which said particles are dispersed in a binder containing an organic solvent.

7. A method for fabricating an optical disk which includes a reflective film (4) having a first reflectivity, and a plurality of pits (2) of particles formed of a material having a second reflectivity different from said first reflectivity of the reflective film, said particles being magnetic particles, said method **characterized by** comprising the steps of:
applying a magnetic field to a stamper (1) thereby causing said magnetic particles to be attracted to and adhered on a projected portion of said stamper;
forming a replica disk by steps in which said stamper is caused to be in contact with a surface of a transparent plate (3) of the optical disk and said magnetic particles are caused to be transferred onto said transparent plate due to the magnetic field thereby forming pits on said transparent plate; and
forming said reflective film on said replica disk.

8. The method for fabricating an optical disk according to claim 7, which includes a step in which said particles are dispersed in a binder containing an organic solvent.

## Patentansprüche

1. Optische Platte, mit:
einem reflektierenden Film (4), der ein erstes Reflexionsvermögen besitzt; und
mehreren Pits (2), über denen der reflektierende Film ausgebildet ist, wobei die Pits aus einem Werkstoff mit einem zweiten Reflexionsvermögen, das von dem ersten Reflexionsvermögen des reflektierenden Films verschieden ist, gebildet sind, **dadurch gekennzeichnet, daß** die Pits aus Kohlenstoffpartikeln gebildet sind.

2. Optische Platte nach Anspruch 1, in der jedes der Kohlenstoffpartikel einen Durchmesser von 100-500 Angström besitzt.

3. Optische Platte, mit:
einem reflektierenden Film (4), der ein erstes Reflexionsvermögen besitzt; und
mehreren Pits (2), über denen der reflektierende Film ausgebildet ist, wobei die Pits aus einem Werkstoff mit einem zweiten Reflexionsvermögen, das von dem ersten Reflexionsvermögen des reflektierenden Films verschieden ist, gebildet sind, **dadurch gekennzeichnet, daß** die Pits aus magnetischen Partikeln gebildet sind.

4. Optische Platte nach Anspruch 3, in dem die Partikel Eisenoxid-Partikel sind.

5. Verfahren zum Herstellen einer optischen Platte, die einen reflektierenden Film (4) mit einem ersten Reflexionsvermögen und mehrere Pits (2) aus Partikeln, die aus einem Werkstoff mit einem zweiten Reflexionsvermögen, das vom ersten Reflexionsvermögen des reflektierenden Films verschieden ist, gebildet sind, umfaßt, wobei das Verfahren **gekennzeichnet ist durch** die folgenden Schritte:
Befestigen der Partikel auf einem vorstehenden Abschnitt eines Stempels (1);
Bilden einer Replikaplatte **durch** die Schritte, in denen der Stempel dazu veranlaßt wird, mit einer Oberfläche einer lichtdurchlässigen Platte (3) der optischen Platte in Kontakt zu gelangen, und die Partikel dazu veranlaßt werden, auf die lichtdurchlässige Platte übertragen zu werden, wodurch auf der lichtdurchlässigen Platte Pits gebildet werden; und
Ausbilden des reflektierenden Films auf der Replikaplatte.

6. Verfahren zum Herstellen einer optischen Platte nach Anspruch 5, das einen Schritt umfaßt, in dem die Partikel in einem ein organisches Lösungsmittel enthaltenden Bindemittel dispergiert werden.

7. Verfahren zum Herstellen einer optischen Platte, die einen reflektierenden Film (4) mit einem ersten Reflexionsvermögen sowie mehrere Pits (2) aus Partikeln, die aus einem Werkstoff mit einem zweiten Reflexionsvermögen, das von dem ersten Reflexionsvermögen des reflektierenden Films verschieden ist, gebildet sind, umfaßt, wobei die Partikel magnetische Partikel sind und das Verfahren **gekennzeichnet ist durch** die folgenden Schritte:
Anlegen eines Magnetfeldes an einen Stempel (1), wodurch die magnetischen Partikel angezogen werden und auf einem vorstehenden Abschnitt des Stempels anhaften;
Bilden einer Replikaplatte **durch** die Schritte, in denen der Stempel dazu veranlaßt wird, mit einer Oberfläche einer lichtdurchlässigen Platte (3) der optischen Platte in Kontakt zu gelangen, und die magnetischen Partikel dazu veranlaßt werden, auf die lichtdurchlässige Platte aufgrund des Magnetfeldes übertragen zu werden, wodurch auf der lichtdurchlässigen Platte Pits gebildet werden; und
Bilden des reflektierenden Films auf der Replikaplatte.

8. Verfahren zum Herstellen einer optischen Platte nach Anspruch 7, das einen Schritt umfaßt, in dem die Partikel in einem ein organisches Lösungsmittel enthaltenden Bindemittel dispergiert werden.

## Revendications

1. Disque optique comprenant :
un film réflecteur (4) qui comporte une première réflexivité ; et
une pluralité de marques (2) sur lesquelles est formé ledit film réflecteur, lesdites marques se composant d'un matériau qui a une seconde réflexivité différente de ladite première réflexivité du film réflecteur,
**caractérisé en ce que** les marques se composent de particules de carbone.

2. Disque optique selon la revendication 1, dans lequel chacune desdites particules de carbone a un diamètre de 100 à 500 Angströms.

3. Disque optique comprenant :
un film réflecteur (4) qui comporte une première réflexivité ; et
une pluralité de marques (2) sur lesquelles est formé ledit film réflecteur, lesdites marques se composant d'un matériau qui a une seconde réflexivité différente de ladite première réflexivité du film réflecteur, **caractérisé en ce que** lesdites marques se composent de particules magnétiques

4. Disque optique selon la revendication 3 dans lequel lesdites particules sont des particules d'oxyde de fer.

5. Procédé de fabrication d'un disque optique qui comprend un film réflecteur (4) ayant une première réflexivité, et une pluralité de marques (2) de particules formées d'un matériau ayant une seconde réflexivité différente de ladite première réflexivité du film réflecteur, ledit procédé étant **caractérisé par** les étapes de :
fixation desdites particules sur une partie en saillie d'une matrice (1) ;
formation d'une réplique de disque par étapes dans lesquelles ladite matrice est mise en contact avec une surface d'une plaque transparente (3) du disque optique et dans laquelle lesdites particules sont transférées sur ladite plaque transparente, ce qui forme des marques sur ladite plaque transparente ; et
formation dudit film réflecteur sur ladite réplique de disque.

6. Procédé de fabrication d'un disque optique selon la revendication 5 incluant une étape dans laquelle lesdites particules sont réparties dans un liant contenant un solvant organique.

7. Procédé de fabrication d'un disque optique qui comprend un film réflecteur (4) comportant une première réflexivité, et une pluralité de marques (2) de particules se composant d'un matériau ayant une seconde réflexivité différente de ladite première réflexivité du film réflecteur, lesdites particules étant des particules magnétiques, ledit procédé étant **caractérisé par** les étapes de :
application d'un champ magnétique sur une matrice (1), ce qui provoque l'attraction et l'adhérence desdites particules magnétiques sur une partie en saillie de ladite matrice ;
formation d'une réplique de disque par étapes dans lesquelles ladite matrice est mise en contact avec une surface d'une plaque transparente (3) du disque optique et dans lesquelles lesdites particules magnétiques sont transférées sur ladite plaque transparente en raison du champ magnétique, ce qui forme des marques sur ladite plaque transparente ; et
formation dudit film réflecteur sur ladite réplique de disque.

8. Procédé de fabrication d'un disque optique selon la revendication 7 qui comprend une étape dans laquelle lesdites particules sont réparties dans un liant contenant un solvant organique.
